# EUROPÄISCHE PATENTSCHRIFT

(11) **EP 2 084 421 B1**
(45) Veröffentlichungstag und Bekanntmachung des Hinweises auf die Patenterteilung: **01.01.2014**
(21) Anmeldenummer: 07819291.1
(22) Anmeldetag: 24.10.2007
(51) Int. Cl.: F16D 48/06

(54) **AKTUATORANORDNUNG FÜR EINE KRAFTFAHRZEUGKUPPLUNG**
ACTUATOR ARRANGEMENT FOR A MOTOR VEHICLE CLUTCH
ENSEMBLE D'ACTIONNEUR POUR UN EMBRAYAGE DE VEHICULE AUTOMOBILE

(30) Priorität: 26.10.2006 DE 102006051287
(43) Veröffentlichungstag der Anmeldung: 05.08.2009
(73) Patentinhaber: GETRAG Getriebe- und Zahnradfabrik Hermann Hagenmeyer GmbH & Cie KG, 74199 Untergruppenbach (DE)
(72) Erfinder: SEUFERT, Martin, 71711 Steinheim (DE); KALISCH, Tobias, 78050 Villingen-Schwenningen (DE); HETTICH, Ralf, 70794 Filderstadt (DE)
(74) Vertreter: Steil, Christian
(86) Internationale Anmeldenummer: PCT/EP2007/009239
(87) Internationale Veröffentlichungsnummer: WO 2008/049606

(56) Entgegenhaltungen:
- EP-A- 1 176 329
- WO-A-96/25612
- DE-A1- 10 138 395
- DE-T2- 69 922 025
- GB-A- 2 191 875

## Beschreibung

Die vorliegende Erfindung betrifft einen Antriebsstrang gemäß dem Oberbegriff des Anspruchs 1 und ein Verfahren nach dem Oberbegriff des Anspruchs 11.

Kupplungen für Kraftfahrzeuge gibt es in unterschiedlichen Ausführungsformen. Stand der Technik sind heute Trockenkupplungen, die durch das Drücken eines Kupplungspedals geöffnet werden. Ohne Betätigung sind diese Kupplungen geschlossen ("normally closed"). Mittlerweile befinden sich neue Kupplungssysteme in Doppelkupplungsgetrieben auf dem Markt.

Diese Doppelkupplungen sind häufig hydraulisch betätigt und im Allgemeinen "normally open", d.h. ohne Betätigung öffnet die Kupplung. Dies hat den Vorteil, dass im Störungsfall (z. B. bei Druckverlust) beide Kupplungen öffnen und so ein sicherer Zustand eingenommen wird. Dabei genügt es, aus den hydraulischen Betätigungszylindern der Doppelkupplungen eine nur geringe Menge an Drucköl entweichen zu lassen, um den Druck vollständig, d. h. bis zum Schleifpunkt der Kupplung, abzubauen. Dies geht bei hydraulischen Kupplungen sehr schnell. Auch bei einem schwerwiegenden Fehler (z. B. Prozessorfehler, etc.) im Falle eines Resets öffnen die beiden Kupplungen ausreichend schnell, um den sicheren Zustand zu erreichen. Bei einem Reset werden alle Ausgänge des Steuergerätes (SG) kontrolliert abgeschaltet und das Steuergerät anschließend neu gebootet.

Das gleichzeitige Schließen beider Kupplungen bei eingelegten Gängen in beiden Teilgetrieben könnte zu einem Verspannungszustand im Getriebe führen, mit der Gefahr eines Blockierens der Antriebsachse.

Weiterhin sind auch Kupplungssysteme nach dem Prinzip "normally stay" (oder normally hold) bekannt. Bei diesen Aktuatoranordnungen wird die jeweilige Kupplung in dem aktuellen Zustand gehalten.

Bei den Doppelkupplungsgetrieben rücken neben den hydraulisch betätigten Systemen immer mehr elektromechanisch betätigte Systeme in den Vordergrund. Der Grund hierfür ist neben der geringeren Komplexität ein Verbrauchsvorteil (weniger Energiebedarf bei der Kupplungsbetätigung), sowie geringere Kosten. Allerdings haben diese Systeme systembedingt leichte Defizite im Bereich der Dynamik. Derartige elektromechanisch (also durch Elektromotoren oder Elektromagnete, etc.) betätigte Doppelkupplungen erreichen bei aktiver Betätigung durch die Elektromotoren hinreichend gute Stellzeiten, so dass hierdurch der sichere Zustand durch aktives Öffnen der Kupplungen erreicht werden kann.

Diese Kupplungen werden bislang ebenfalls bevorzugt als "normally open" Systeme ausgeführt (Begründung wie oben: ein sicherer Zustand wird von alleine erreicht). Die Rückstellkraft zum Öffnen der Kupplungen wird dabei durch eine Feder erzeugt. Im Falle eines Resets müssen also die Federn die beiden Kupplungen öffnen, wobei hierbei die beiden Elektromotoren und die Koppelelemente zwischen den Elektromotoren und den Kupplungen ebenfalls mitbeschleunigt werden müssen. Dies bereitet aufgrund des erheblichen Massenträgheitsmomentes der Elektromotoren und der großen Übersetzung zwischen den Kupplungen und den Elektromotoren Probleme. Weiterhin muss eine sehr starke Rückstellfeder eingebaut werden, was Kosten und Bauraumprobleme verursacht und zu hohen Betätigungskräften beim Schließen der Kupplungen führt. Damit werden die bei elektromechanischen Aktuatoranordnungen erhofften Verbrauchsreduzierungen zumindest verringert. Die Bordnetzbelastung steigt aufgrund der hohen Ströme der Elektromotoren stark oder sogar unzulässig an.

Bei Auftreten eines Fehlerzustandes kann es also schwierig sein, die Kupplungen innerhalb der notwendigen kurzen Zeit zu öffnen, um rechtzeitig den sicheren Zustand zu erreichen.

Aus dem Dokument US 2006/0223672 A1 ist ein automatisiertes Schaltgetriebe bekannt, dessen Kupplungsaktuator wenigstens zwei elektrische Motoren zum Ansteuern der Kupplung aufweist. Wenn einer der elektrischen Motoren ausfällt, kann dies erfasst werden. Die Kupplung ist eine "normally closed" Kupplung.

Ferner offenbart das Dokument DE 101 38 395 A1 eine Notbetätigungsvorrichtung für eine hydraulisch betätigte Kupplung, die ebenfalls als "normally closed" ausgeführt ist.

Hierbei wird zum Notöffnen der Kupplung im Fehlerfalle ein Druckspeicher vorgesehen, mittels dessen auch bei Auftreten des Fehlerzustandes die Kupplung sicher aus dem "normally closed" Zustand in einen geöffneten Zustand überführt werden kann.

Ein Doppelkupplungsgetriebe mit elektromechanischer Betätigung ist aus der DE 699 22 025 T2 bekannt.

EP 1176329 offenbart einen Antriebestrang nach dem Oberbegriff des Anspruchs 1.

Es ist die Aufgabe der Erfindung, eine elektromechanische Aktuatoranordnung für eine Trennkupplung eines Kraftfahrzeuges anzugeben, die in eine geöffnete Position vorgespannt ist und mit der im Falle eines Fehlerzustandes ein schnelles Öffnen insbesondere der Trennkupplung möglich ist.

Diese Aufgabe wird durch einen Antriebsstrang mit den Merkmalen des Anspruchs 1 und ein Verfahren mit den Merkmalen des Anspruchs 11 gelöst.

Prinzipiell sind solche Fehlerzustände relevant, bei denen die Kupplungen ohne aktive Betätigung (also passiv) öffnen oder gehalten werden (normally open oder normally stay) sollen, also z.B. im Resetfall wie bei einem Prozessorfehler oder einem Softwarefehler. Im Resetfall werden die Ausgänge des Steuergerätes im Stand der Technik schlagartig abgeschaltet, was zu einem langsamen Öffnen der Kupplungen führt.

Das Steuergerät wird nun hardwareseitig so aufgebaut bzw. um eine unabhängige Sicherheitseinrichtung erweitert, dass eine aktive Betätigung der Kupplung im Fehlerzustand auch bei Ausfalle des Steuergerätes möglich ist. Dabei ist bevorzugt, dass diese Beschaltung unabhängig vom Hauptprozessor im Steuergerät und damit auch softwareunabhängig ist, d. h. vorzugsweise rein durch eine Hardwarebeschaltung erfolgt. Dadurch kann die Betätigungszeit der Kupplung reduziert werden. Folglich können vorzugsweise alle heute bekannten Fehler, bei denen der Elektromotor funktionsfähig ist (also Prozessorfehler, Softwarefehler, etc.) in allen Fahrsituationen innerhalb kurzer Zeit in einen sicheren Zustand überführt werden.

Bei Doppelkupplungsgetrieben, die nach dem Prinzip "normally open" arbeiten, können bspw. im Falle eines Fehlerzustandes (Reset des Steuergerätes) die beiden Elektromotoren der Kupplungen für zumindest eine vorzugsweise definierte Zeit in Richtung "Kupplung öffnen" bestromt werden.

Durch die Erfindung kann erreicht werden, dass:
- die Federkraft der Rückstellfeder zum Öffnen der Kupplung reduziert werden kann
- damit insgesamt noch weitere Verbrauchvorteile erreicht werden können (geringere Halteenergie)
- die Strombelastung des Bordnetzes sinkt
- weniger Bauraum für eine schwächere Feder und die Betätigungskinematik zwischen Feder und Elektromotor benötigt wird
- geringere Kosten für die schwächere Feder und die Betätigungskinematik zwischen Feder und Elektromotor entstehen

Grundsätzlich läßt sich o. g. Erfindung, welche am Beispiel einer elektromechanisch betätigten Doppelkupplung in normally open Design beschrieben wurde, wie folgt übertragen:
- läßt sich auch auf Einfachkupplungen anwenden
- läßt sich auf trockene oder nasse Kupplungen (Einfach- oder Doppel-) anwenden
- läßt sich neben "normally open" Kupplungen auch auf "normally stay" Kupplungen anwenden.

Normally closed ist nur der Vollständigkeit halber erwähnt. Ein System nach dem Prinzip "Normally stay" ist jedoch als durchaus realisierbar; hier wäre das Maximum der oben beschriebenen Vorteile zu erzielen.

Bei dem Antriebsstrang gemäß Anspruch 1 ist es bevorzugt, wenn die Sicherheitseinrichtung eine Sicherheits-Hardware aufweist, die separat von dem Steuergerät vorgesehen ist.

Auf diese Weise kann die Sicherheitseinrichtung unbeeinflusst von einem etwaigen Fehlerzustand des Steuergerätes arbeiten.

Ferner ist es bevorzugt, wenn die Sicherheitseinrichtung einen Fehlererkennungssensor aufweist, der einen Fehlerzustand des Steuergerätes erkennt.

Dies kann bevorzugt dadurch erfolgen, dass der Fehlererkennungssensor erkennt, wenn die Energieversorgung des Steuergerätes unter ein bestimmtes Niveau fällt und/oder das Steuergerät einem Reset unterzogen wird.

Der Fehlererkennungssensor kann beispielsweise in einfacher Hardware als ein Vergleichsbaustein ausgeführt sein, der eine Spannung des Steuergerätes mit einer Referenzspannung vergleicht oder ein Reset-Signal abfragt.

Zusätzlich oder alternativ hierzu kann das Steuergerät einen solchen Fehlererkennungssensor aufweisen, der einen Fehlerzustand des Steuergerätes erkennt und dazu ausgelegt ist, einen Reset des Steuergerätes auszulösen.

Bei dieser Ausführungsform ist das Steuergerät vorzugsweise eigensicher ausgeführt. Hierunter soll verstanden werden, dass das Steuergerät beispielsweise zwei Prozessoren aufweist (Redundanz), eine Überwachungseinrichtung aufweist (Watch dog) und/oder eine sonstige Signalüberwachung.

Sofern das Steuergerät auf diese Weise eigensicher ausgeführt ist, kann das Steuergerät Fehler wie Prozessorfehler oder Softwarefehler selber erkennen und anschließend einen Reset auslösen.

In diesem Fall ist in der Sicherheitseinrichtung kein separater Fehlererkennungssensor notwendig. Vielmehr kann der Fehlererkennungssensor des Steuergerätes mit der Sicherheitseinrichtung verbunden werden und dort beispielsweise unmittelbar einen Sicherheitsschalter auslösen.

Der Begriff des Fehlererkennungssensors ist vorliegend allgemein zu verstehen im Sinne einer Einrichtung, die dazu in der Lage ist, einen Fehlerzustand zu erkennen.

Ferner ist es vorteilhaft, wenn die Sicherheitseinrichtung einen Sicherheitsschalter aufweist, der von dem Fehlererkennungssensor betätigt wird, um eine Energieversorgung mit einer Steuerelektronik zu verbinden, die dazu ausgelegt ist, den Elektromotor anzusteuern, um die Trennkupplung zu öffnen.

Die Steuerelektronik kann dabei vorzugsweise ebenfalls in vergleichsweise einfacher Hardware separat von der Steuereinheit ausgeführt sein, also unabhängig von dieser Steuereinheit. Die Steuerelektronik kann demzufolge durch einen einfachen Hardwarebaustein gebildet sein, kann jedoch auch durch ein ASIC gebildet sein. Generell ist es auch denkbar, dass die Steuerelektronik einen eigenen Prozessor aufweist, also eine eigene Intelligenz. Ferner ist es generell auch denkbar, dass die Steuerelektronik eine eigene Leistungselektronik für den Elektromotor aufweist. In letzterem Fall kann die Steuerelektronik beispielsweise auch Fehler der normalerweise vorhandenen Leistungselektronik kompensieren.

Gemäß einer weiteren bevorzugten Ausführungsform weist die Steuerelektronik ein Zeitglied auf, das die Ansteuerung des Elektromotors zeitlich begrenzt.

Da die Kupplung bei einem automatisierten Schaltgetriebe bzw. die zwei Kupplungen eines Doppelkupplungsgetriebes generell in Öffnungsrichtung vorgespannt sind, ist das "Eingreifen" der Sicherheitseinrichtung in der Regel nur für einen kurzen Zeitraum erforderlich, um die Kupplung(en) sehr schnell zu öffnen. Nach dieser relativ kurzen Zeitspanne ergibt sich aufgrund der Vorspannung ohnehin ein Öffnungszustand der Kupplung(en), so dass ein weiterer Eingriff der Sicherheitseinrichtung nicht erforderlich ist.

Gemäß einer weiteren bevorzugten Ausführungsform ist zwischen der Sicherheitseinrichtung und dem Elektromotor eine Leistungselektronik angeordnet.

Hierbei kann die Sicherheitseinrichtung sozusagen parallel zu der Steuereinheit auf die ohnehin vorhandene Leistungselektronik zugreifen. Es ist daher nicht erforderlich, dass die Sicherheitseinrichtung eine eigene Leistungselektronik beinhaltet.

Sofern die Steuerelektronik der Sicherheitseinrichtung eine eigene Leistungselektronik aufweist, greift die Sicherheitseinrichtung vorzugsweise zwischen der regulären (ohnehin vorhandenen) Leistungselektronik und dem Elektromotor an.

Bei dem Antriebsstrang für eine Doppelkupplungsanordnung gemäß Anspruch 9 sind die obigen vorteilhaften Ausführungsformen in entsprechender Weise anwendbar.

Ferner ist es hierbei bevorzugt, wenn beide Trennkupplungen in die geöffnete Position vorgespannt sind.

Ferner kann die Sicherheitseinrichtung bei allen Ausführungsformen der Erfindung generell mit der gleichen Energiequelle (Energiespeicher) verbunden sein wie das Steuergerät.

Gemäß einer alternativen Ausführungsform ist es bei den erfindungsgemäßen Aktuatoranordnungen jedoch auch möglich, dass die Sicherheitseinrichtung einen eigenen elektrischen Energiespeicher aufweist und dazu ausgelegt ist, im Falle eines Fehlerzustandes den Elektromotor unabhängig von dem Steuergerät mit elektrischer Leistung aus dem eigenen elektrischen Energiespeicher zu versorgen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische Ansicht eines Kraftfahrzeugantriebsstranges mit einer erfindungsgemäßen Aktuatoranordnung zur Betätigung einer Einfach-Trennkupplung; und
- Fig. 2: eine der Fig. 1 vergleichbare Ansicht eines Antriebsstranges mit einem Doppelkupplungsgetriebe.

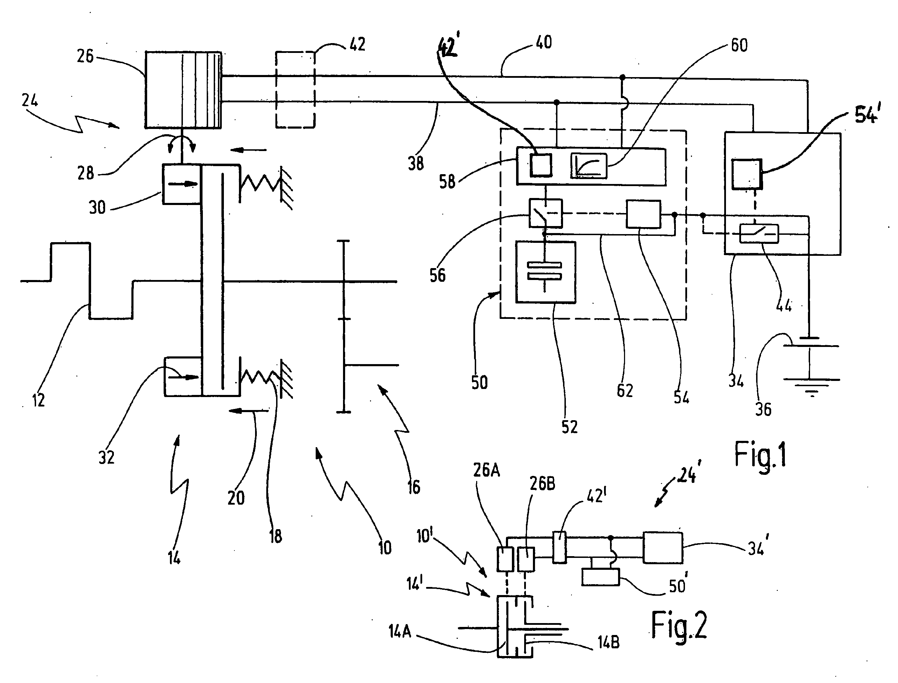

In Fig. 1 ist ein Antriebsstrang für ein Kraftfahrzeug generell mit 10 bezeichnet. Der Antriebsstrang 10 beinhaltet einen Verbrennungsmotor 12, eine Trennkupplung 14 und ein Stufengetriebe 16. Eine Abtriebswelle des Verbrennungsmotors 12 (oder eines anderen Antriebsmotors) ist mit einem Eingangsglied der Trennkupplung 14 verbunden. Ein Ausgangsglied der Trennkupplung 14 ist mit einer Eingangswelle des Stufengetriebes 16 verbunden. Das Stufengetriebe 16 kann beispielsweise ein Stirnradgetriebe sein.

Bei 18 ist ein mechanischer Energiespeicher gezeigt, der die Trennkupplung 14 in einem Grundzustand in eine geöffnete Position vorspannt. Die entsprechende Betätigungsrichtung in die geöffnete Position ist bei 20 gezeigt.

Zur Betätigung der Trennkupplung 14 ist eine Aktuatoranordnung gemäß einer Ausführungsform der vorliegenden Erfindung vorgesehen und mit 24 bezeichnet.

Die Aktuatoranordnung ist als elektromechanische Aktuatoranordnung ausgebildet und beinhaltet einen Elektromotor 26. Antriebsbewegungen des Elektromotors 26 sind als Rotationsrichtungen 28 dargestellt. Ferner ist ein Rotations-Translationswandler 30 vorgesehen, der die Rotationsbewegungen der Abtriebswelle des Elektromotors 26 in Linearbewegungen zur Betätigung der Trennkupplung 14 umsetzt. Die in der Regel zum Schließen der Trennkupplung 14 vorgesehene Betätigungsrichtung der Trennkupplung 14, die entgegengesetzt zu der Richtung 20 verläuft, ist bei 32 gezeigt.

Die Aktuatoranordnung 24 beinhaltet ferner ein Steuergerät 34, das beispielsweise einen Mikrocontroller aufweisen kann und mit einer Versorgungsspannung 36 (beispielsweise einer Batteriespannung des Kraftfahrzeuges) verbunden ist.

Das Steuergerät 34 ist über Ansteuerleitungen 38, 40 mit einer Leistungselektronik 42 verbunden, über die sich der Elektromotor 26 ansteuern lässt.

Da das Steuergerät 34 einen Mikroprozessor oder Mikrocontroller aufweist, auf dem Computerprogramme ablaufen, ist in Zuordnung zu dem Steuergerät 34 ferner eine Resetlogik 44 vorgesehen.

Das Steuergerät 34 ist vorzugsweise eigensicher ausgebildet. Hierzu weist das Steuergerät 34 beispielsweise zwei Prozessoren auf, die einander abgleichen, eine Überwachungseinrichtung wie einen Watch dog und/oder eine interne Signalüberwachung. Demzufolge ist das Steuergerät 34 vorzugsweise selber dazu in der Lage, einen Reset über die Resetlogik 44 auszulösen, wenn ein Fehler erkannt wird.

Demzufolge ist in Fig. 1 in dem Steuergerät 34 ein "Fehlererkennungssensor" 54' eingetragen, der solche Fehlerzustände des Steuergerätes 34 erfassen kann.

Generell ist es auch möglich, dass in einer übergeordneten, nicht dargestellten Steuereinrichtung festgestellt wird, wenn das Steuergerät 34 nicht ordnungsgemäß arbeitet. Dann kann die übergeordnete Steuereinrichtung über die Resetlogik 44 einen Reset des Steuergerätes 34 auslösen werden. Bei einem Reset startet ein Grundprogramm des Steuergerätes 34 neu (das Steuergerät 34 wird "gebootet"). Ferner werden bei einem Reset bestimmte Steuerparameter in ihren Grundzustand zurück versetzt.

Die Aktuatoranordnung 24 weist ferner eine separat bzw. unabhängig von dem Steuergerät 34 vorgesehene Sicherheitseinrichtung in Form einer Sicherheits-Hardware 50 auf.

Die Sicherheits-Hardware 50 kann, wie dargestellt, mit der Versorgungsspannung 36 verbunden sein (ggf. über das Steuergerät 34). Alternativ ist es auch möglich, in der Sicherheits-Hardware 50 einen zusätzlichen elektrischen Energiespeicher 52 vorzusehen, beispielsweise einen Elektrolytkondensator, einen Akkumulator oder dgl.).

Die Sicherheits-Hardware 50 beinhaltet einen Sicherheitsschalter 56 und eine Steuerelektronik 58, und optional einen Fehlererkennungssensor 54.

Die Sicherheits-Hardware 50 kann aus vergleichsweise einfachen elektronischen Bauelementen aufgebaut sein und beinhaltet vorzugsweise keinen Mikroprozessor oder Ähnliches.

Der Fehlererkennungssensor 54 ist dazu ausgelegt, einen Fehlerzustand der Aktuatoranordnung 24 zu erkennen. Im einfachsten Fall erfasst der Fehlererkennungssensor 54 einen Reset des Steuergerätes 34, was als ein Fehlerzustand angesehen wird. Sofern in dem Steuergerät ein Fehlererkennungssensor 54' vorgesehen ist, ist in der Sicherheits-Hardware 50 kein eigener Fehlererkennungssensor 54 notwendig. Vielmehr kann ein entsprechendes Signal des Steuergerätes 34 auch unmittelbar mit dem Sicherheitsschalter 56 verbunden sein.

Während eines Resets werden die Ausgänge des Steuergerätes 34 an den Ansteuerleitungen 38, 40 in der Regel auf Null gesetzt, so dass der elektrische Motor 26 nicht mehr angesteuert wird. In diesem Fall drückt der mechanische Energiespeicher 18 die Trennkupplung 14 zwar in den geöffneten Zustand (wodurch ein sicherer Zustand eingerichtet wird). Hierbei muss der mechanische Energiespeicher 18 jedoch normalerweise die Masse des Rotors des elektrischen Motors 26 mit bewegen, was dazu führt, dass das Öffnen der Trennkupplung 14 möglicherweise nicht schnell genug erfolgen kann.

Sofern der Fehlererkennungssensor 54, 54' (der beispielsweise einen einfachen Spannungsvergleicher beinhalten kann) einen solchen Fehlerzustand erkennt, schaltet der Fehlererkennungssensor 54, 54' den Sicherheitsschalter 56 ein, der die Steuerelektronik 58 mit elektrischer Energie versorgt (entweder über die Versorgungsspannung 36 und/oder über den elektrischen Energiespeicher 52).

Hierdurch wird die Steuerelektronik 58 mit Energie versorgt. Die Steuerelektronik 58 ist dazu ausgelegt, an die Leistungselektronik 42 relativ einfache Signale abzugeben, die dafür sorgen, dass der elektrische Motor 26 in entgegengesetzter Richtung angetrieben wird, so dass der elektrische Motor die Trennkupplung 14 aktiv in Richtung der Öffnungsrichtung 20 antreibt und somit öffnet. Mit anderen Worten unterstützt der elektrische Motor 26 dabei die Wirkung des mechanischen Energiespeichers 18. Hierdurch kann der sichere geöffnete Zustand der Trennkupplung 14 sehr schnell erreicht werden.

In der Steuerelektronik 58 kann dabei zur Ansteuerung der Leistungselektronik 42 eine einfache Ansteuerungsfunktion hinterlegt sein. Dies kann im einfachsten Fall ein Einschalten des elektrischen Motors 26 bei richtiger Polung sein. Alternativ ist es auch möglich, in der Steuerelektronik 58 eine Rampenfunktion zu hinterlegen (die beispielsweise über einen einfachen Zähler oder dgl.) realisiert werden kann, also ohne Mikroprozessor).

Die Steuerelektronik 58 kann, wie oben erwähnt, mit einfachen Hardware-Bauteilen (Standard-Bauteilen) aufgebaut sein. Die Steuerelektronik 58 kann jedoch auch ein ASIC oder dgl. beinhalten. Ferner ist es generell auch möglich, dass die Steuerelektronik eine eigene Intelligenz in Form eines Mikroprozessors oder dgl. enthält.

Die Steuerelektronik 58 kann je nach Art des verwendeten Motors geeignete Signale abgeben. Im Fall eines Gleichstrommotors können, wie oben erwähnt, einfache Sprung- oder Rampenfunktionen bereitgestellt werden. Bei Verwendung von Wechselstrom- oder Drehstrommotoren ist es beispielsweise auch denkbar, dass die Steuerelektronik 58 ein ASIC oder Ähnliches beinhaltet, das einfache Ansteuerungssignale in geeignete Wechsel- oder Drehstromsignale umsetzt (Phasenansteuerung oder Ähnliches).

Im Falle der Verwendung eines solchen Wechselstrom- bzw. Drehstrommotors ist es auch möglich, ein solches ASIC zur Umwandlung von einfachen Steuersignalen in Wechselstrom- bzw. Drehstrom-Ansteuerungssignale in der normalen Leistungselektronik 42 vorzusehen.

Generell ist es auch möglich, in der Steuerelektronik 58 eine eigene Leistungselektronik 42' vorzusehen, die dann ggf. auch ein solches Wechselstrom- bzw. Drehstrom-Umsetzungs-ASIC beinhaltet. In Fig. 1 ist dies schematisch als Option in der Steuerelektronik 58 dargestellt. In diesem Fall versteht sich, dass die Steuerelektronik 58 nicht parallel am Eingang der regulären Leistungselektronik 42 angreift, sondern am Ausgang der regulären Leistungselektronik 42, damit die Steuerelektronik 58 den Elektromotor 26 direkt ansteuern kann.

Sofern in der Steuerelektronik 58 auch eine Leistungselektronik 42' enthalten ist, können ggf. auch Fehler der regulären Leistungselektronik 42 kompensiert werden. Es versteht sich, dass hierzu eine geeignete Überwachungsfunktion auch in dem Steuergerät 34 hinterlegt sein kann.

Ferner ist in der Steuerelektronik 58 ein Zeitglied 60 vorgesehen. Das Zeitglied 60 dient dazu, das Ansteuern des elektrischen Motors 26 mittels der Sicherheits-Hardware 50 auf einen relativ kurzen Zeitraum zu begrenzen. Der Zeitraum ist so gewählt, dass die Trennkupplung 14 sicher und schnell geöffnet wird. Generell ist es auch möglich, dem elektrischen Motor 26 lediglich einen kurzen Stromstoß mittels der Sicherheits-Hardware zu erteilen, um die gewünschte Wirkung zu erzielen.

Sobald die Trennkupplung 14 geöffnet ist, sorgt der mechanische Energiespeicher 18 dafür, dass die Kupplung geöffnet bleibt. Daher ist eine weitere Ansteuerung des elektrischen Motors 26 über die Sicherheits-Hardware 50 nicht erforderlich.

Sofern der Reset-Zustand des Steuergerätes 34 abgeschlossen ist, kann anschließend über das Steuergerät 34 wieder ein reguläres Steuersignal über die Leitungen 38, 40 an die Leistungselektronik 42 gegeben werden, um den elektrischen Motor 26 nach Bedarf anzusteuern.

Bei 62 ist ferner eine Leitung gezeigt, die die Verbindung des Sicherheitsschalters 56 mit der elektrischen Versorgungsspannung 36 andeutet (zusätzlich oder anstelle des Energiespeichers 52).

Fig. 2 zeigt eine alternative Ausführungsform einer Aktuatoranordnung 34' für ein Doppelkupplungsgetriebe, das eine Doppelkupplungsanordnung 14' mit einer ersten Reibkupplung 14A und einer zweiten Reibkupplung 14B aufweist. In entsprechender Weise weist die Aktuatoranordnung 34' zwei elektrische Motoren 26A, 26B auf, die mittels einer Leistungselektronik 42' (oder mittels zweier Leistungselektroniken 42') angesteuert werden. Im Übrigen weist die Aktuatoranordnung 24' ebenfalls ein Steuergerät 34' und eine zusätzliche Sicherheitseinrichtung 50' auf, die in entsprechender Weise wie die Sicherheitseinrichtung 50 arbeiten können. Bevorzugt wird bei Erkennen eines Fehlerzustandes mittels der Sicherheitseinrichtung 50' dafür gesorgt, dass beide Kupplungen 26A, 26B in kurzer Zeit geöffnet werden.

Ergänzend lässt sich Folgendes anmerken.

Das Steuergerät 34 kann hardwareseitig so aufgebaut (bzw. um die Sicherheitseinrichtung 50 erweitert) werden, dass im Falle eines Resets die Spannungsversorgung 62 des Steuergerätes zur Betätigung der Treiberbausteine 42 der Elektromotoren herangezogen wird.

Die Sicherheitseinrichtung 50 ist in Fig. 1 separat von dem Steuergerät 34 dargestellt; sie kann jedoch auch in das Steuergerät integriert werden, insbesondere in dessen Gehäuse. Der Begriff separat ist daher nicht räumlich, sondern funktional zu verstehen.

Über ein Zeitglied 60 kann die Zeitdauer der Bestromung festgelegt werden und an die Erfordernisse der Mechanik (Kupplung, Aktuatorik, Elektromotoren) angepasst werden. Nach einer kurzen Bestromung der Elektromotoren in Richtung öffnende Kupplung werden, wie beim normalen Reset, alle Ausgänge abgeschaltet. Der sichere Zustand kann dadurch zeitgerecht erreicht werden.

## Patentansprüche

1. Antriebsstrang (10) für Kraftfahrzeuge, mit einer Trennkupplung (14), die elektromechanisch betätigbar ist, und mit einer Aktuatoranordnung (24), die einen Elektromotor (26), der mit der Trennkupplung (14) gekoppelt ist, um diese zu betätigen, und ein Steuergerät (34) zur Ansteuerung des Elektromotors (26) sowie eine Sicherheitseinrichtung (50) aufweist, die parallel zu dem Steuergerät (34) mit dem Elektromotor (26) verbunden ist, wobei die Sicherheitseinrichtung (50) im Falle eines Fehlerzustandes den Elektromotor (26) unabhängig von dem Steuergerät (34) mit elektrischer Leistung versorgt, um die Trennkupplung (14) zu öffnen,
**dadurch gekennzeichnet, dass**
die Trennkupplung (14) in eine geöffnete Position vorgespannt ist, und wobei der Fehlerzustand ein Reset des Steuergerätes (34) ist.

2. Antriebsstrang nach Anspruch 1, **dadurch gekennzeichnet, dass** die Sicherheitseinrichtung (50) einen Fehlererkennungssensor (54) aufweist, der einen Fehlerzustand des Steuergerätes (34) erkennt.

3. Antriebsstrang nach Anspruch 2, **dadurch gekennzeichnet, dass** der Fehlererkennungssensor (54) erkennt, wenn die Energieversorgung des Steuergerätes unter ein bestimmtes Niveau fällt und/oder das Steuergerät einem Reset unterzogen wird.

4. Antriebsstrang nach einem der Ansprüche 1-3, **dadurch gekennzeichnet, dass** das Steuergerät (34) einen Fehlererkennungssensor (54') aufweist, der einen Fehlerzustand des Steuergerätes (34) erkennt und dazu ausgelegt ist, einen Reset des Steuergerätes (34) auszulösen.

5. Antriebsstrang nach einem der Ansprüche 1 - 4, **dadurch gekennzeichnet, dass** die Sicherheitseinrichtung einen Sicherheitsschalter (56) aufweist, der von dem Fehlererkennungssensor (54) betätigt wird, um eine Energieversorgung (62; 52) mit einer Steuerelektronik (58) zu verbinden, die dazu ausgelegt ist, den Elektromotor (26) anzusteuern, um die Trennkupplung (14) zu öffnen.

6. Antriebsstrang nach Anspruch 5, **dadurch gekennzeichnet, dass** die Steuerelektronik ein Zeitglied (60) aufweist, das die Ansteuerung des Elektromotors (26) zeitlich begrenzt.

7. Antriebsstrang nach einem der Ansprüche 1- 6, **dadurch gekennzeichnet, dass** zwischen der Sicherheitseinrichtung (50) und dem Elektromotor (26) eine Leistungselektronik (42) angeordnet ist.

8. Antriebsstrang nach einem der Ansprüche 1 - 7, **dadurch gekennzeichnet, dass** die Aktuatoranordnung (24) einen mechanischen Energiespeicher (18) aufweist, mittels dessen die Trennkupplung (14) in die geöffnete Position vorgespannt ist.

9. Antriebsstrang nach einem der Ansprüche 1-8 für eine Doppelkupplungsanordnung (14') eines Doppelkupplungsgetriebes, mit zwei Elektromotoren (26A, 26B), die mit einer jeweiligen Trennkupplung (14A, 14B) der Doppelkupplungsanordnung (14') koppelbar sind, wobei das Steuergerät (34) zur Ansteuerung der zwei Elektromotoren (26) dient, und wobei die Sicherheits-Hardware (50') parallel zu dem Steuergerät (34) mit den zwei Elektromotoren (26) verbunden und dazu ausgelegt ist, im Falle eines Fehlerzustandes die zwei Elektromotoren (26) unabhängig von dem Steuergerät (34) mit elektrischer Leistung zu versorgen.

10. Antriebsstrang nach einem der Ansprüche 1- 9, **dadurch gekennzeichnet, dass** die Sicherheitseinrichtung einen eigenen elektrischen Energiespeicher (52) aufweist und dazu ausgelegt ist, im Falle eines Fehlerzustands den Elektromotor (26) unabhängig von dem Steuergerät (34) mit elektrischer Leistung aus dem elektrischen Energiespeicher (52) zu versorgen.

11. Verfahren zum Betreiben eines Antriebsstranges (10) für ein Kraftfahrzeug gemäß einem der Ansprüche 1 bis 10, wobei der Antriebsstrang (10) eine Trennkupplung (14), die eine geöffnete Position vorgespannt und elektromechanisch betätigbar ist, und eine Aktuatoranordnung (24) für die Trennkupplung (14) aufweist, wobei die Aktuatoranordnung (24) einen Elektromotor (26), der mit der Trennkupplung (14) gekoppelt ist, um diese zu betätigen, und ein Steuergerät (24) zur Ansteuerung des Elektromotors (26) sowie eine Sicherheitseinrichtung (50) aufweist, die parallel zu dem Steuergerät (34) mit Elektromotor (26) verbunden ist, wobei die Sicherheitseinrichtung (50) im Falle eines Fehlerzustandes den Elektromotor (26) unabhängig von dem Steuergerät (34) mit elektrischer Leistung versorgt, um die Trennkupplung (14) zu öffnen, wobei der Fehlerzustand ein Reset des Steuergerätes ist.

## Claims

1. A drive drain (10) for a motor vehicle, comprising a separation clutch (14) which can be activated electromechanically, and an actuator arrangement (24) which has an electric motor (26) which is coupled to the separation clutch in order to activate it, which has a control unit (34) for actuating the electric motor (26), and which has a safety device (50) which is connected to the electric motor (26) parallel to the control unit (34), and which supplies, in the case of a fault state, electric power to the electric motor (26) independently of the control unit (34) in order to open the clutch (14),
**characterized in that**
the separation clutch (14) is prestressed into an opened position, and wherein the fault state is a reset of the control unit (34).

2. Drive drain according to claim 1, **characterized in that** the safety device (50) has a fault detection sensor (54) which detects a fault state of the control unit (34).

3. Drive drain according to claim 2, **characterized in that** the fault detection sensor (54) detects when the power supply of the control unit drops below a certain level and/or the control unit is subjected to a reset.

4. Drive drain according to one of claims 1-3, **characterized in that** the control unit (34) has a fault detection sensor (54') which detects a fault state of the control unit (34) and is configured to trigger a reset of the control unit (34).

5. Drive drain according to one of claims 1-4, **characterized in that** the safety device has a safety switch (56) which is activated by the fault detection sensor (54) in order to connect a power supply (62; 52) to control electronics (58) which are configured to actuate the electric motor (26) in order to open the clutch (14).

6. Drive drain according to claim 5, **characterized in that** the control electronics have a timer element (60) which temporally limits the actuation of the electric motor (26).

7. Drive drain according to one of claims 1-6, **characterized in that** power electronics (42) are arranged between the safety device (50) and the electric motor (26).

8. Drive drain according to one of claims 1-7, **characterized in that** the actuator arrangement (24) has a mechanical energy store (18) by means of which the clutch (14) is prestressed into the opened position.

9. Drive drain according to one of claims 1-8 for a double clutch arrangement (14') of a double clutch gear mechanism, having two electric motors (26A, 26B) which can be coupled to a respective separation clutch (14A, 14B) of the double clutch arrangement (14'), the control unit (34) serving for actuating the two electric motors (26), and wherein the safety hardware (50') is connected to the two electric motors (26) parallel to the control unit (34), and is configured, in the case of a fault state, to supply electrical power to the two electric motors (26) independently of the control unit (34).

10. Drive drain according to one of claims 1-9, **characterized in that** the safety device has a separate electrical energy store (52) and is configured, in the case of a fault state, to supply electrical power to the electric motor (26) from the electrical energy store (52) independently of the control unit (34).

11. Method for operating a drive drain for a motor vehicle according to one of claims 1 to 10, wherein the drive drain (10) comprises a separation clutch (14) which is prestressed into an opened position and can be activated electromechanically, and an actuator arrangement (24) for the separation clutch (14), wherein the actuator arrangement (24) comprises an electric motor (26) which is coupled to the separation clutch (14) in order to actuate it, and a control unit (24) for actuating the electric motor (26), as well as a safety device (50) which is connected to the electric motor (26) parallel to the control unit (34), wherein the safety device (50) supplies, in the case of a fault state, electric power to the electric motor (26) independently of the control unit (34) in order to open the separation clutch (14), wherein the fault state is a reset of the control unit.

## Revendications

1. Chaîne cinématique (10) pour véhicules automobiles, avec un embrayage de coupure (14) à actionnement électromécanique et avec un ensemble d'actionneur (24) comprenant un moteur électrique (26) couplé à l'embrayage de coupure (14) pour actionner ce dernier et un appareil de commande (34) pour commander le moteur électrique (26) ainsi qu'un dispositif de sécurité (50) relié au moteur électrique (26) parallèlement à l'appareil de commande (34), le dispositif de sécurité (50) alimentant le moteur électrique (26) en puissance électrique indépendamment de l'appareil de commande (34) en présence d'un état anormal afin d'ouvrir l'embrayage de coupure (14), **caractérisée en ce que** l'embrayage de coupure (14) est précontraint dans une position ouverte et que l'état anormal est une réinitialisation de l'appareil de commande (34).

2. Chaîne cinématique selon la revendication 1, **caractérisée en ce que** le dispositif de sécurité (50) comprend un capteur de détection d'anomalie (54) détectant un état anormal de l'appareil de commande (34).

3. Chaîne cinématique selon la revendication 2, **caractérisée en ce que** le capteur de détection d'anomalie (54) détecte lorsque l'alimentation en énergie de l'appareil de commande chute en dessous d'un niveau défini et/ou que l'appareil de commande est soumis à une réinitialisation.

4. Chaîne cinématique selon l'une quelconque des revendications 1 à 3, **caractérisée en ce que** l'appareil de commande (34) comporte un capteur de détection d'anomalie (54') pouvant détecter un état anormal de appareil de commande (34) et étant conçu pour pouvoir déclencher une réinitialisation de l'appareil de commande (34).

5. Chaîne cinématique selon l'une quelconque des revendications 1 à 4, **caractérisée en ce que** le dispositif de sécurité comporte un contacteur de sécurité (56) actionné par le capteur de détection d'anomalie (54) pour relier une alimentation en énergie (62 ; 52) à un système électronique de commande (58) conçu pour commander au moteur électrique (26) d'ouvrir l'embrayage de coupure (14).

6. Chaîne cinématique selon la revendication 5, **caractérisée en ce que** le système électronique de commande comporte un élément de mesure du temps (60) permettant de limiter l'excitation du moteur électrique (26) dans le temps.

7. Chaîne cinématique selon l'une quelconque des revendications 1 à 6, **caractérisée en ce qu'**un système électronique de puissance (42) est disposé entre le dispositif de sécurité (50) et le moteur électrique (26).

8. Chaîne cinématique selon l'une quelconque des revendications 1 à 7, **caractérisée en ce que** l'ensemble d'actionneur (24) comporte un accumulateur d'énergie mécanique (18) à l'aide duquel l'embrayage de coupure (14) est précontraint dans la position ouverte.

9. Chaîne cinématique selon l'une quelconque des revendications 1 à 8 pour un agencement à double embrayage (14') d'une boîte de vitesses à double embrayage, avec deux moteurs électriques (26A, 26B) pouvant être couplés à un embrayage de coupure (14A, 14B) respectif de l'agencement à double embrayage (14'), l'appareil de commande (34) servant à commander les deux moteurs électriques (26) et le système matériel de sécurité (50') étant relié aux deux moteurs électriques (26) parallèlement à l'appareil de commande (34) et étant conçu pour alimenter en puissance électrique les deux moteurs électriques (26) indépendamment de l'appareil de commande (34) en présence d'un état anormal.

10. Chaîne cinématique selon l'une quelconque des revendications 1 à 9, **caractérisée en ce que** le dispositif de sécurité comporte un accumulateur d'énergie électrique (52) propre et est conçu pour alimenter en puissance électrique le moteur électrique (26) indépendamment de l'appareil de commande (34) à partir de l'accumulateur d'énergie électrique (52) en présence d'un état anormal.

11. Procédé servant à faire fonctionner une chaîne cinématique (10) pour un véhicule automobile selon l'une quelconque des revendications 1 à 10, la chaîne cinématique (10) comprenant un embrayage de coupure (14) précontraignant une position ouverte et pouvant être actionné de façon électromécanique ainsi qu'un ensemble d'actionneur (24) servant pour l'embrayage de coupure (14), l'ensemble d'actionneur (24) comprenant un moteur électrique (26) couplé à l'embrayage de coupure (14) pour actionner ce dernier et un appareil de commande (24) servant à commander le moteur électrique (26) ainsi qu'un dispositif de sécurité (50) relié au moteur électrique (26) parallèlement à l'appareil de commande (34), le dispositif de sécurité (50) alimentant en puissance électrique le moteur électrique (26) indépendamment de l'appareil de commande (34) en présence d'un état anormal en vue d'ouvrir l'embrayage de coupure (14), l'état anormal étant une réinitialisation de l'appareil de commande.
